# EUROPÄISCHE PATENTSCHRIFT

(11) **EP 1 792 361 B1**
(45) Veröffentlichungstag und Bekanntmachung des Hinweises auf die Patenterteilung: **21.03.2012**
(21) Anmeldenummer: 05769899.5
(22) Anmeldetag: 01.08.2005
(51) Int. Cl.: H01Q 1/12, H01Q 1/32, B60R 11/02

(54) **VORRICHTUNG ZUR BEFESTIGUNG EINER FAHRZEUGANTENNE**
FIXING DEVICE FOR A MOTOR VEHICLE ANTENNA
DISPOSITIF DE FIXATION D'UNE ANTENNE DE VEHICULE AUTOMOBILE

(30) Priorität: 15.09.2004 DE 102004044500
(43) Veröffentlichungstag der Anmeldung: 06.06.2007
(73) Patentinhaber: Blaupunkt Antenna Systems GmbH & Co. KG, 31137 Hildesheim (DE)
(72) Erfinder: LERCHNER, Henry, 30171 Hannover (DE)
(74) Vertreter: Flach, Dieter Rolf Paul
(86) Internationale Anmeldenummer: PCT/EP2005/053741
(87) Internationale Veröffentlichungsnummer: WO 2006/029938

(56) Entgegenhaltungen:
- US-A- 4 324 503
- US-A1- 2003 068 198
- US-A1- 2004 183 734

## Beschreibung

### Technisches Gebiet

Die Erfindung betrifft eine Vorrichtung zur Befestigung einer Fahrzeugantenne nach dem Oberbegriff des Anspruches 1.

### Stand der Technik

Eine Vorrichtung der gattungsgemäßen Art ist in der DE 100 09 978 A1 gezeigt und beschrieben.

Die Vorrichtung dient insbesondere zur Befestigung einer Dachantenne auf einer Fahrzeugkarosserie. Die Vorrichtung ist mit Rastvorsprüngen versehen, die eine Öffnung der Fahrzeugkarosserie hintergreifen. Dadurch ist ein automatisches Vorfixieren der Vorrichtung im Bereich des Fahrzeuginnenraumes möglich.

Solche Vorrichtungen sind vorher schon bekannt gewesen, mit denen noch keine Vorfixierung möglich war. Die Vorrichtung zur Befestigung der Fahrzeugantenne an der Fahrzeugkarosserie hat einen Gewindebolzen, der durch die Öffnung geführt wird und daher ein Durchsteckteil ist. Auf dem Fahrzeugdach liegt eine Halteplatte auf, die größer als die Öffnung ist. Mittels einer an dem Gewindebolzen greifenden Befestigungsmutter wird im Fahrzeuginnenraum die Antenne befestigt.

Wird der Gewindebolzen an der Fahrzeugkarosserie durch die Öffnung der Fahrzeugkarosserie gesteckt, so muss dieser ansonsten von innen, bzw. die Fahrzeugantenne von außen, festgehalten werden, während gleichzeitig innerhalb der Fahrzeugkarosserie die von der Fahrzeugantenne über den Gewindebolzen weggeführten Antennenkabel umgebogen und die Befestigungsmutter montiert werden müssen. Ohne das Festhalten des Gewindebolzens bzw. der Fahrzeugantenne könnte die mit dem Gewindebolzen verbundene Fahrzeugantenne umkippen bzw. aus der Öffnung der Fahrzeugkarosserie herausrutschen und der Befestigungsvorgang mißlingen. Für den beschriebenen Befestigungsvorgang sind somit je nach Fahrzeugtyp unter Umständen zwei Personen erforderlich, wobei eine Person den Gewindebolzen mit der Fahrzeugantenne hält, während die andere Person ihn an der Fahrzeugkarosserie fest schraubt.

Zum Vorfixieren sind bei einer in der DE 100 09 978 A 1 offenbarten Lösung Rastvorsprünge an einer Klammer angeformt. Die Klammer ist als Federelement mit Außenschenkeln ausgebildet. Die Vorsprünge sind als federelastische Federarme ausgeführt, so dass sie einerseits zusammen mit dem Gewindebolzen durch die Öffnung gesteckt werden können, indem sie automatisch nach innen gebogen werden und andererseits die Antenne halten können, indem sie sich nach außen spreizen können, um die Fahrzeugkarosserie zu hintergreifen.

Die Klammer ist im Wesentlichen als Ringscheibe ausgeführt, die die Außenschenkel mit den Federarmen trägt. Die Ringscheibe befindet sich im montierten Zustand zwischen der Halteplatte und der Fahrzeugkarosserie. Damit die Außenschenkel durch die Öffnung gesteckt werden können, muss die Öffnung entsprechend groß sein.

Bei dieser Lösung wird, um eine Abdichtung zum Beispiel gegen Wassereintritt zu erreichen, elastisches Material in Form einer Dichtung eingesetzt. Die Halteplatte ist nämlich wegen der zwischenliegenden Ringscheibe leicht von der Fahrzeugkarosserie beabstandet.

Aus der US 2003/0068198 A1 ist eine Vorrichtung zur Befestigung einer Fahrzeugantenne an einer Fahrzeugkarosserie bekannt. Diese umfasst Rastvorsprünge, die in eine Öffnung der Fahrzeugkarosserie zum Vorfixieren der Vorrichtung auf der Fahrzeugkarosserie auf der der Fahrzeugantenne abgewandten Seite hintergreifen. Die Rastvorsprünge sind konzentrisch an einem Ring befestigt, der an einem Gewindestutzen steckbar ausgeführt ist, sowie als federelastische Federarme ausgeführt. Der Gewindestutzen ist als Durchsteckteil ausgeführt und kann durch die Öffnung der Fahrzeugkarosserie gesteckt werden. Weiterhin umfasst diese Vorrichtung eine an dem Durchsteckteil befestigte Halteplatte. Der Ring mit den Federarmen kann zusammen mit dem Gewindestutzen durch die Öffnung der Fahrzeugkarosserie gesteckt werden. Damit diese Lösung funktionsfähig ist, muss zwischen der Fahrzeugkarosserie und dem durchgesteckten Ring ein Abstandselement in Form einer Feder eingesetzt werden. Zudem muss, damit der Ring nicht aus dem Gewindestutzen während einer Montage fällt, zusätzlich eine Mutter montiert werden. Außerdem sind zwei weitere Ringscheiben erforderlich, so dass eine Vielzahl von Teilen erforderlich ist.

### Darstellung der Erfindung, Aufgabe, Lösung, Vorteile

Der Erfindung liegt die Aufgabe zugrunde, eine Vorrichtung der gattungsgemäßen Art so zu verbessern, dass sie einerseits eine einfache Montage erlaubt und andererseits so beschaffen ist, dass ein sicherer Schutz vor Eintritt von Schmutz oder Feuchtigkeit gegeben ist.

Diese Aufgabe wird durch die kennzeichnenden Merkmale des Anspruches 1 in Verbindung mit seinen Oberbegriffsmerkmalen gelöst.

Durch die erfindungsgemäße Klammeranordnung wird in einfacher Weise erreicht, dass im Bereich der Antennenbefestigungsöffnung kein Eindringen von Schmutz und Feuchtigkeit möglich ist. Die Halteplatte kann zum einen nämlich bündig am Fahrzeugdach anliegen und zum anderen ist es nicht notwendig die Klammer durch die Halteplatte bzw. Grundplatte zu stecken, wodurch keine Öffnung in dem Boden der Antenne erforderlich ist.

Die Erfindung liegt der Gedanke zugrunde, die Klammer bzw. eine Haltefeder außen anzuordnen und am Durchsteckteil zu befestigen. Hierzu ist die Klammer U-förmig geformt, wodurch sie seitlich auf dem Durchsteckteil geschoben werden kann. Durch die Aussparungen am Durchsteckteil kann die Klammer an diesem fixiert bzw. verrastet werden, so dass eine Vormontage der Vorrichtung erreicht wird. Auf diese Weise kann auf ein Niederhalten der Antenne während des Verschraubungsvorgangs verzichtet werden.

Erfindungsgemäß ist die Klammer derart gebogen, dass sie zusammen mit dem Durchsteckteil durch die Öffnung der Fahrzeugkarosserie durchsteckbar ist Hierdurch kann die Klammer vormontiert werden, bevor der eigentliche Befestigungsvorgang der Antennen beginnt.

Weiterhin sind die Aussparungen als zwei gegenüberliegende rechteckförmige Vertiefungen oder Öffnungen ausgebildet und die Klammer trägt an den Enden der Außenschenkel flächenvergrößerte Bereiche als Fahnen, aus denen ausgestanzte Außenzungen gebildet sind. wobei zumindest ein Flächenteil der Fahnen in die Öffnungen oder Vertiefungen greift. Hierdurch kann einerseits eine kleine Bauform der Vorrichtung erreicht werden und anderseits eine sichere Vorfixierung der Halteplatte erzielt werden. Die Rastvorsprünge können nämlich relativ groß dimensioniert werden.

Zweckmäßigerweise ist jeweils ein Flächenabschnitt, welcher auf einer gegenüberliegenden Seite der Enden der Haltezungen steht, nach innen gebogen, damit seine Außenkante sich an einer parallel zur Halteplatte verlaufenden Wand abstützt, wohingegen ein anderer Flächenabschnitt der Fahnen sowie im Wesentlichen die Klammer selbst außerhalb der Öffnungen oder Vertiefungen angeordnet sind. Die Klammer wird hierdurch zusätzlich zwischen der Antennenöffnung und dem Durchsteckteil festgehalten, was ein Herausfallen der Klammer sicher verhindert.

Damit eine sehr hohe Dichtwirkung gegeben ist und die Öffnungsstellen auf ein Minimum reduziert werden, durch die Schmutz und Feuchtigkeit eindringen können, ist in einer weiteren vorteilhaften Ausführungsform der Erfindung vorgesehen, dass die Aussparungen derart von der Halteplatte beabstandet sind, dass in der Nähe der Halteplatte an dem

Durchsteckteil zumindest Abschnittsweise eine geschlossene Fläche vorhanden ist, um die Öffnung der Fahrzeugkarosserie zu schließen.

Durch eine etwa halbkreisförmige Form der Klammer, die bevorzugterweise vorhanden ist, wird die Klammer an eine Form des runden Durchsteckteiles angepässt.

Weitere vorteilhafte Weiterbildungen der Erfindung sind in den Unteransprüchen gekennzeichnet.

### Kurze Beschreibung der Zeichnung

Ein Ausführungsbeispiel der Erfindung wird anhand der Zeichnungen näher erläutert.

Es zeigt:
Fig. 1 eine perspektivische Darstellung einer erfindungsgemäßen Vorrichtung, wobei eine Klammer auseinandergezogen darstellt,
Fig. 2eine Schnittdarstellung der Vorrichtung, wobei die Klammer montiert ist,
Fig. 3eine vergrößerte perspektivische Darstellung der Klammer, und
Fig. 4eine weitere perspektivische Darstellung der erfindungsgemäßen Vorrichtung, wobei eine Klammer montiert ist.

### Bester Weg zur Ausführung der Erfindung

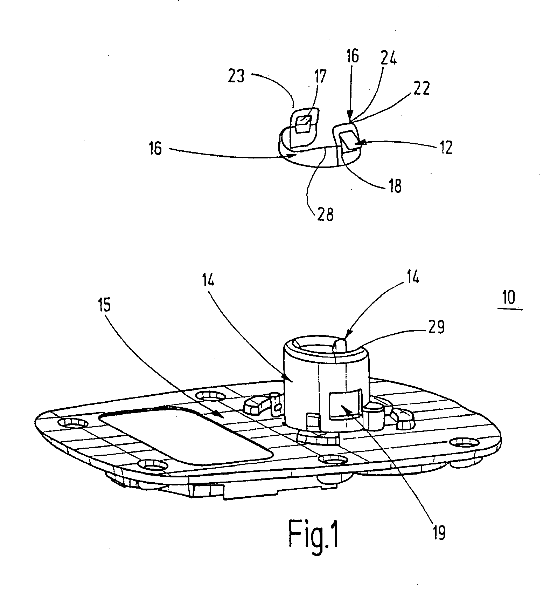

Fig. 1 zeigt eine bevorzugte Ausführungsform einer Vorrichtung 10 zur Befestigung einer Fahrzeugantenne, insbesondere einer Dachantenne, an einer Fahrzeugkarosserie 11. Die Dachantenne selbst ist nicht dargestellt. In Fig. 1 ist die Vorrichtung 10 um 180° gedreht dargestellt, so dass die untere Ausbildung der Vorrichtung 10 besser zu sehen ist.

Damit eine Vorfixierung der Antenne möglich ist, ist die Vorrichtung 10 mit Rastvorsprüngen 12 versehen. Diese hintergreifen in eine Öffnung 13 der Fahrzeugkarosserie 11 zum Vorfixieren der Vorrichtung auf der Fahrzeugkarosserie 11 auf der der Fahrzeugantenne abgewandten Seite.

Weiterhin umfasst die Vorrichtung 10 ein Durchsteckteil 14 sowie eine an dem Durchsteckteil 14 befestigte Halteplatte 15, wobei die Rastvorsprünge 12 an einer Klammer 16 angeformt sind. Die Klammer 16 ist als Federelement mit Außenschenkeln 17, 18 ausgebildet. Die Vorsprünge sind als federelastische Federarme ausgeführt.

Erfindungsgemäß ist die Klammer derart U-förmig geformt, dass sie mit ihren Außenschenkeln 17, 18 in Aussparungen 19, 20 des Durchsteckteiles 14 greift, so dass die Klammer 16 an dem Durchsteckteil 14 befestigbar ist.

Erfindungsgemäß ist die Klammer 16 derart gebogen, dass sie zusammen mit dem Durchsteckteil 14 durch die Öffnung 13 der Fahrzeugkarosserie 11 durchsteckbar ist.

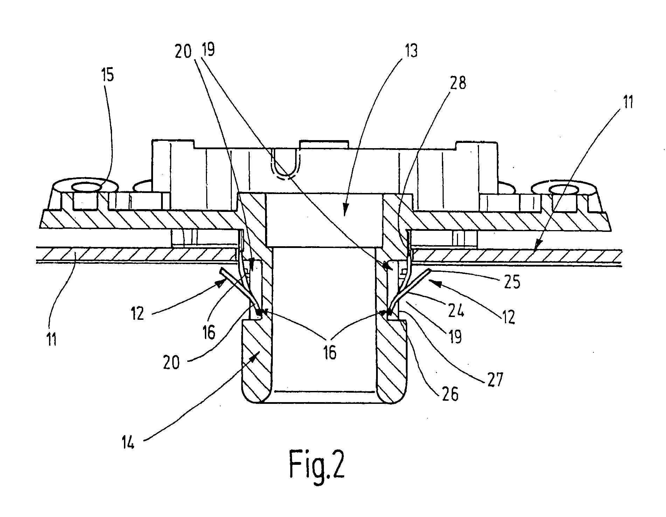

Beim Einführen des Durchsteckteiles 14 verbiegen sich die Rastvorsprünge 12 nach innen, bis das Durchsteckteil 14 soweit gesteckt ist, dass die Rastvorsprünge im Fahrgastraum liegen und sich nach außen entfalten können, wie in Fig. 2 dargestellt ist.

Wie Fig. 1 zeigt, sind die Aussparungen 19, 20 insbesondere als zwei gegenüberliegende rechteckförmige Vertiefungen oder Öffnungen ausgebildet. Die Klammer 16 trägt an den Enden der Außenschenkel bevorzugterweise flächenvergrößerte Bereiche bzw. Fahnen 22, 23.

Aus den Fahnen 22, 23 werden die Außenzungen gestanzt. Vorzugsweise greift ein Flächenteil der Fahnen 22, 23 in die Öffnungen oder Vertiefungen bzw. in die Aussparungen 19, 20. Wie Fig. 2 zeigt. Hierbei ist vorgesehen, dass jeweils ein Flächenabschnitt 24, welcher auf einer gegenüberliegenden Seite der Enden 25 der Haltezungen bzw. Rastvorsprünge 12 steht, nach innen gebogen ist, damit seine Außenkante 26 sich an einer parallel zur Halteplatte 15 verlaufenden Wand 27 abstützt. Ein anderer Flächenabschnitt 28 der Fahnen 22, 23 sowie im Wesentlichen die Klammer 16 selbst liegen außerhalb der Aussparungen 19, 20 bzw. Öffnungen oder Vertiefungen, und zwar zwischen dem Durchsteckteil 16 und der Fahrzeugkarosserie 11.

Wie in Fig. 1 zu sehen ist, sind die Aussparungen 19, 20 von der Halteplatte 11 beabstandet. Dadurch ist in der Nähe der Halteplatte 11 an dem Durchsteckteil 14 eine geschlossene Fläche bzw. Öffnung vorhanden ist. Die Öffnung 13 der Fahrzeugkarosserie 11 wird so geschlossen, dass kein Schmutz oder Feuchtigkeit in den Fahrgastraum eindringen kann.

Wie Fig. 1 zeigt, ist die Klammer 16 etwa halbkreisförmig geformt. Sie hat also etwa den Durchmesser des Durchsteckteiles, wobei die Klammer 16 eine Stahlfeder ist.

Damit eine Mutterverschraubung in gewohnter Weise möglich ist, ist das Durchsteckteil 14 als Gewindebolzen ausgebildet.

Auch ist es sinnvoll, dass das Durchsteckteil 14 seitlich offen ist, damit Antennenkabel durchgeführt werden können. Diese Kabeldurchführungsöffnung 29 ist in Fig. 1 zu sehen.

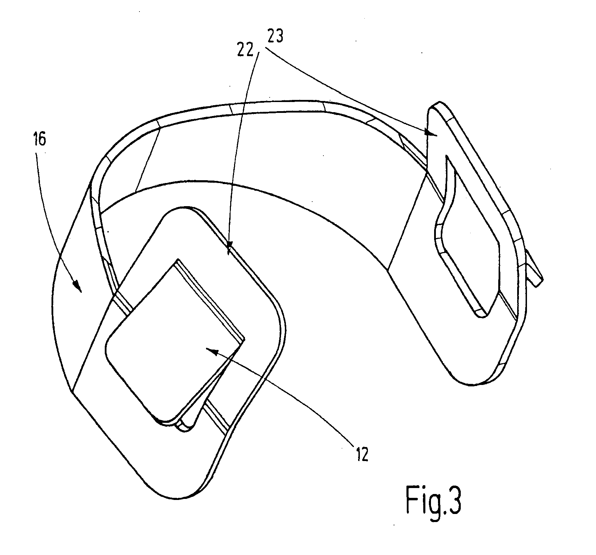

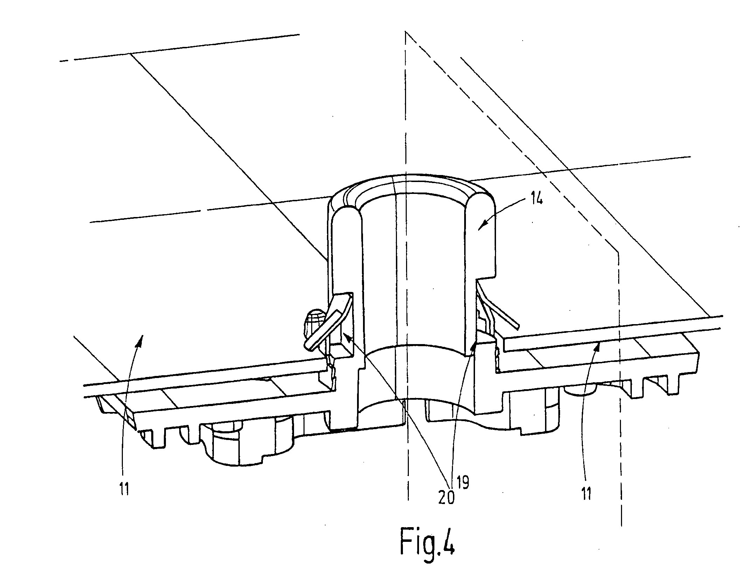

Fig. 3 veranschaulicht noch mal die Klammer 16, während Fig. 4 in einer perspektivischen Darstellung die Befestigung der Vorfixierung der Vorrichtung 10 zeigt.

Die mit der Vorrichtung 10 zu befestigende Fahrzeugantenne ist vorzugsweise eine mit einem Antennenstab und einen Antennenfuß.

Es ist auch möglich, die Antenne an einer anderen Stelle des Fahrzeuges zu befestigen.

## Patentansprüche

1. Vorrichtung (10) zur Befestigung einer Fahrzeugantenne, insbesondere einer Dachantenne; an einer Fahrzeugkarosserie mit Rastvorsprüngen (12), die in eine Öffnung (13) der Fahrzeugkarosserie (11) zum Vorfixieren der Vorrichtung (10) auf der Fahrzeugkarosserie (11) auf der der Fahrzeugantenne abgewandten Seite hintergreifen, und mit einem Durchsteckteil (14) und einer an dem Durchsteckteil (14) befestigten Halteplatte (15), wobei die Rastvorsprünge (12) an einer Klammer (16) angeformt sind und die Klammer (16) als Federelement mit Außenschenkeln (17, 18) ausgebildet ist, sowie die Vorsprünge (12) als federelastische Federarme ausgeführt sind, wobei die Klammer (16) derart gebogen ist, dass sie zusammen mit dem Durchsteckteil (14) durch die Öffnung (13) der Fahrzeugkarosserie (11) durchsteckbar ist, und die Klammer (16) derart U-förmig geformt ist, dass sie mit ihren Außenschenkeln (17, 18) in Aussparungen (19, 20) des Durchsteckteiles (14) greift, so das die Klammer (16) an dem Durchsteckteil (14) befestigbar ist, **dadurch gekennzeichnet, dass** die Aussparungen (19, 20) als zwei gegenüberliegende rechteckförmige Vertiefungen oder Öffnungen ausgebildet sind und die Klammer (16) an den Enden der Außenschenkel (17, 18) flächenvergrößerte Bereiche als Fahnen (22, 23) trägt, aus denen ausgestanzte Außenzungen gebildet sind, wobei zumindest ein Flächenteil (24) der Fahnen (22, 23) in die Öffnungen oder Vertiefungen greift.

2. Vorrichtung nach Anspruch 1, **dadurch gekennzeichnet, dass** jeweils ein Flächenabschnitt (24), welcher auf einer gegenüberliegenden Seite der Enden der Haltezungen steht, nach innen gebogen ist, damit seine Außenkante (26) sich an einer parallel zur Halteplatte verlaufenden Wand (27) abstützt, wohingegen ein anderer Flächenabschnitt (28) der Fahnen (22, 23) sowie im Wesentlichen die Klammer (16) selbst außerhalb der Öffnungen oder Vertiefungen angeordnet sind.

3. Vorrichtung nach Anspruch 1 oder 2, **dadurch gekennzeichnet, dass** die Aussparungen (19, 20) derart von der Halteplatte (15) beabstandet sind, dass in der Nähe der Halteplatte (15) an dem Durchsteckteil (14) zumindest Abschnittsweise eine geschlossene Fläche vorhanden ist, um die Öffnung (13) der Fahrzeugkarosserie (11) zu schließen.

4. Vorrichtung nach einem der vorhergehenden Ansprüche, **dadurch gekennzeichnet, dass** die Klammer (16) etwa halbkreisförmig geformt ist.

5. Vorrichtung nach einem der vorhergehenden Ansprüche, **dadurch gekennzeichnet, dass** die Klammer (16) eine Stahlfeder ist.

6. Vorrichtung nach einem der vorhergehenden Ansprüche, **dadurch gekennzeichnet, dass** das Durchsteckteil (14) als Gewindebolzen ausgebildet ist.

7. Vorrichtung nach einem der vorhergehenden Ansprüche, **dadurch gekennzeichnet, dass** das Durchsteckteil (14) seitlich offen zum Durchführen mindestens eines Antennenkabels ist.

8. Fahrzeugantenne mit einem Antennenstab, einem Antennenfuß und mit einer Vorrichtung nach einem der vorhergehenden Ansprüche.

## Claims

1. Device (10) for fixing a motor vehicle antenna, in particular a roof antenna, to a motor vehicle body, comprising locking projections (12) which engage in an opening (13) of the motor vehicle body (11) from behind for preinstalling the device (10) on the motor vehicle body (11) on the side facing away from the motor vehicle antenna, and comprising an insertion component (14) and a retaining plate (15) attached to the insertion component (14), the locking projections (12) being integrally formed on a clamp (16) and the clamp (16) being configured as a spring element comprising external legs (17, 18) and the projections (12) being configured as resilient spring arms, the clamp (16) being curved in such a way that it can be inserted through the opening (13) of the motor vehicle body (11) together with the insertion component (14), and the clamp (16) being U-shaped in such a way that, by means of the external legs (17, 18) thereof, it engages in recesses (19, 20) of the insertion component (14), so that the clamp (16) can be attached to the insertion component (14), **characterised in that** the recesses (19, 20) are configured as two opposite rectangular cavities or openings and the clamp (16) bears surface-enlarged regions in the form of lugs (22, 23) on the ends of the external legs (17, 18), from which lugs punched-out external tongues are formed, at least one surface portion (24) of the lugs (22, 23) engaging in the openings or cavities.

2. Device according to claim 1, **characterised in that** in each case a surface portion (24), which is on an opposite side of the ends of the retaining tongues, is curved inwards so that the outer edge (26) of said surface portion is supported on a wall (27) which extends parallel to the retaining plate, whereas another surface portion (28) of the lugs (22, 23) and, substantially, the clamp (16) itself, are arranged outside the openings or cavities.

3. Device according to either claim 1 or claim 2, **characterised in that** the recesses (19, 20) are spaced from the retaining plate (15) in such a way that a closed surface is available at least in portions in the proximity of the retaining plate (15) on the insertion component (14), in order to close the opening (13) of the motor vehicle body (11).

4. Device according to any one of the preceding claims, **characterised in that** the clamp (16) is approximately semi-circular in shape.

5. Device according to any one of the preceding claims, **characterised in that** the clamp (16) is a steel spring.

6. Device according to any one of the preceding claims, **characterised in that** the insertion component (14) is configured as a threaded bolt.

7. Device according to any one of the preceding claims, **characterised in that** the insertion component (14) is laterally open for guiding at least one antenna cable through.

8. Motor vehicle antenna comprising an antenna rod, an antenna base and comprising a device according to any one of the preceding claims.

## Revendications

1. Dispositif (10) pour la fixation d'une antenne de véhicule, en particulier d'une antenne de toiture, sur une carrosserie de véhicule, comprenant des saillies d'enclenchement (12) qui, pour la préfixation du dispositif (10) sur la carrosserie (11) du véhicule, s'engagent par l'arrière dans une ouverture (13) de la carrosserie (11) du côté détourné de l'antenne, et comprenant une partie à enficher (14) et une plaque de maintien (15) fixée sur la partie à enficher (14), dans lequel les saillies d'enclenchement (12) sont conformées sur une pince (16) et la pince (16) est réalisée comme un élément de ressort avec des branches extérieures (17, 18), et les saillies (12) sont réalisées comme des bras de ressort élastiques, ladite pince (16) étant cintrée de telle façon qu'elle peut être enfichée conjointement avec la partie à enficher (14) à travers l'ouverture (13) de la carrosserie (11), et la pince (16) est conformée en forme de U de telle façon qu'elle s'engage avec ses branches extérieures (17, 18) dans des échancrures (19, 20) de la partie à enficher (14), de sorte que la pince (16) peut être fixée sur la partie à enficher (14), **caractérisé en ce que** les échancrures (19, 20) sont réalisées comme deux renfoncements ou ouvertures rectangulaires opposé(e)s, et la pince (16) porte aux extrémités des branches extérieures (17, 18) des zones à surface agrandie comme des pattes (22, 23) à partir desquelles sont formées des languettes extérieures estampées, et au moins une partie de la surface (24) des pattes (22, 23) s'engage dans les ouvertures ou renfoncements.

2. Dispositif selon la revendication 1, **caractérisé en ce qu'**un tronçon de surface respectif (24), qui se dresse sur un côté opposé des extrémités des languettes de maintien, est cintré vers l'intérieur afin que son arête extérieure (26) s'appuie contre une paroi (27) qui s'étend parallèlement à la plaque de maintien, tandis qu'un autre tronçon de surface (28) des pattes (22, 23) ainsi que la pince (16) elle-même sont sensiblement agencés à l'extérieur des ouvertures ou renfoncements.

3. Dispositif selon la revendication 1 ou 2, **caractérisé en ce que** les échancrures (19, 20) sont à distance de la plaque de maintien (15) de telle façon qu'au voisinage de la plaque de maintien (15) il existe sur la partie à enficher (14) au moins par tronçon une surface fermée afin de fermer l'ouverture (13) de la carrosserie (11) du véhicule.

4. Dispositif selon l'une des revendications précédentes, **caractérisé en ce que** la pince (16) est formée sensiblement en forme de demi-cercle.

5. Dispositif selon l'une des revendications précédentes, **caractérisé en ce que** la pince (16) est un ressort en acier.

6. Dispositif selon l'une des revendications précédentes, **caractérisé en ce que** la partie à enficher (14) est réalisée sous forme de goujon fileté.

7. Dispositif selon l'une des revendications précédentes, **caractérisé en ce que** la partie à enficher (14) est ouverte latéralement pour la traversée d'au moins un câble d'antenne.

8. Antenne de véhicule comprenant une tige d'antenne, un pied d'antenne et un dispositif selon l'une des revendications précédentes.
